# EUROPEAN PATENT APPLICATION

(11) **EP 1 107 596 A2**
(43) Date of publication of application: **13.06.2001**
(21) Application number: 00309173.3
(22) Date of filing: 18.10.2000
(51) Int. Cl.: H04N 7/173

(54) **System and method for user notification and communications in a cable network**

(30) Priority: 08.12.1999 US 457187
(71) Applicant: AT&T Corp., New York, NY 10013-2412 (US)
(72) Inventor: Muller, Urs A., Keyport, NJ 07735 (US)
(74) Representative: Asquith, Julian Peter

(57) **Abstract**

A system and method for notifying users on a cable network as to the presence of other users on the cable network. A user may specify which of the other users on the cable network the user wishes to be notified as to the presence of. Once the specified user(s) is present on the cable network, the requesting user will be notified of the specified user's presence. An interactive communication link may be established between the users to facilitate communication between the users, for example, when both users are watching the same television program.

## Description

### Field of the Invention

The present invention relates generally to communications via cable settop boxes and more particularly to a system and method for initiating and establishing interactive communications between one or more cable settop box users.

### Background of the Invention

Cable television systems have made possible the transmission of many channels of television programs to the homes of subscribers. Instead of being limited to the number of VHF and UHF channels that can be transmitted and received in a given area, the number of channels in cable systems is limited only by the transmission characteristics of the cable itself and the ability to compress the information in television programs into narrower-bandwidth channels. The advent of fiber-optic transmission systems for use in cable television networks has also vastly increased the number of channels available.

Such increase in channels has also given rise to a desire for more interactive television systems. For example, systems where a subscriber can transmit information or requests back into the system, which information or requests may subsequently affect programs or information directed to such subscriber. There are a wide variety of applications for interactive television systems, such as video games, video catalog shopping, teaching systems, movies on demand and audio programs. Each application can be tailored for an individual subscriber, for example a subscriber may be able to select the language of the soundtrack in a movie. However, while such systems provide interactivity between the user and the various systems and features, the amount of interactivity between various users is limited.

A cable user typically can communicate with a particular cable headend which is servicing the user's local cable network, but communication between different users themselves in the cable network is limited. Accordingly, it would be desirable if communications could be enabled between different users in a cable network.

### Summary of the Invention

The present invention provides a system and method for notifying one or more cable users about the presence of one or more other cable users in a cable network. The system and network also provides for an interactive communication facility between the cable users. In one embodiment, the present invention involves receiving a request from a cable user in the cable network, the request identifying at least one other cable user in the cable network the requesting cable user wishes to be notified of when the at least one other cable user is present on the cable network. Once the request is received, the system determines the identity of the one or more cable users who are present on the cable network. A notification may then be provided to the requesting cable user when the at least one other cable user identified by the requesting cable user is present on the cable network.

The present invention also involves establishing an interactive communication between the requesting cable user and the at least one other cable user when both the requesting cable user and the at least one other cable user are present on the cable network. The users may communicate in an on screen interactive communications screen which may include text, audio and/or video.

### Brief Description of the Drawings

FIG. 1 shows an exemplary cable communications network in which the present invention may be implemented.

FIG. 2 illustrates the basic process by which the present invention notifies a user.

FIG. 3 illustrates a basic user system in accordance with the teachings of the present invention.

FIG. 4 illustrates a basic user system by which users on the cable network may communicate with one another.

### Detailed Description

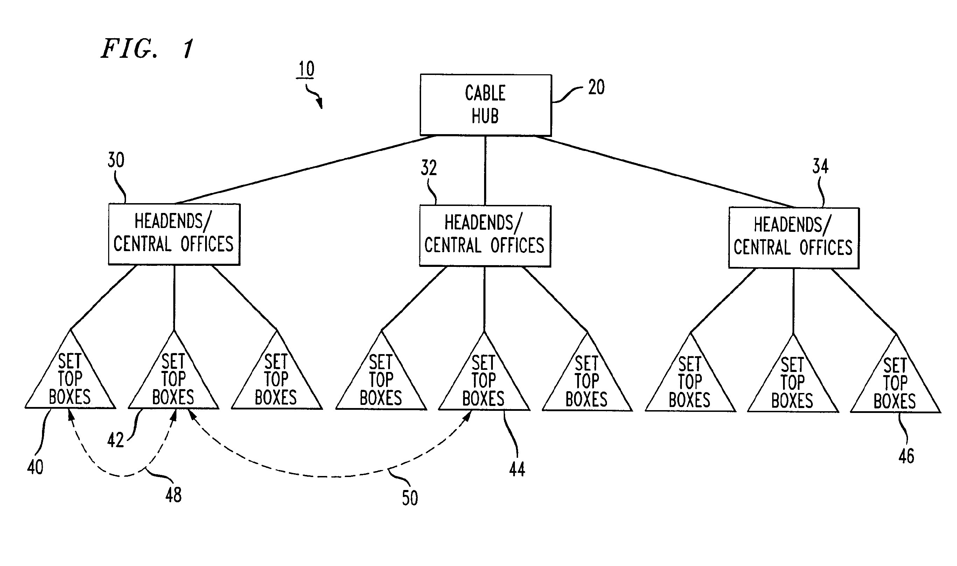

Referring to FIG.1, an exemplary cable television communications network 10 for facilitating communications between cable users is shown. As used herein, the term "cable user" refers to a user of a distributed information network which provides content, information and entertainment to the user via a coaxial, fiber, wireless or other similar network typically at the user's home or additionally at a remote location via a communicative device which can access the network remotely. As shown in FIG. 1, the communications network 10 generally comprises a cable hub 20 which communicates with a plurality of headends/central offices 30, 32 and 34. The headends/central offices 30, 32 and 34 each in turn communicate with a plurality of settop terminals or boxes 40, 42 and 44. The settop boxes 40, 42 and 44 provide an interface between the televisions of one or more users and the communication network 10. The hub 20 may be physically located remote from the headends 30, 32 and 34 alternatively, may be located at the site of any one of the headends 30, 32 and 34.

The communication network 10 interfaces with a plurality of information and content providers which provide video, audio and related services to the users. Through the hub 20 and the headends 30, 32 and 34, the communication network 10 provides two-way transparent data transport service between the information and content providers and the users at their respective settop boxes. In the present invention, the headends 30, 32 and 34 facilitate communications between the users and their respective settop boxes 40, 42 and 44. Communications may be, for example, via a communications link 48 between users 40 and 42 serviced by a similar headend 30, or may be a communications link 50 between users 42 and 44 serviced by different headend 30 and 32. In a preferred embodiment of the invention, communications in the network are transmitted over one of or a combination of coaxial and/or fiber optic medium.

In the preferred embodiment, the headends includes a central processing unit (CPU) and associated memory which form an internal computer within the headend. The computer acts as the central storage and programming unit for the distributed network of settop boxes. The computer contains complete executable computer programs for a plurality of given applications to be accessed and run by the settop boxes.

In a preferred embodiment, the settop box of the present invention includes a central processing unit (CPU), a memory module and a network interface module which also form an internal computer within the settop box.

In an exemplary embodiment, the settop box is assigned a unique address that permits the headend to communicate with the user to, for example, establish in the settop box a program authorization code that determines which pay program or programs that user will be able to receive. Such unique address permits the headend to be able to identify that settop box with which it is either sending information to or receiving information from. Identification of a user in the cable network may be provided by cable system records which associates a user's settop box's unique address with the user's cable account number, name, address, telephone number, social security number or other identifying indicia so that a particular settop box address is associated with an actual user. In operation, identification of a user may be performed in a number of fashions including: when the user turns on the settop box, when an activity is performed on the settop box; e.g. changing a channel, ordering a movie, or submitting a request; or manually by polling a certain settop box or boxes. Typically, the settop box will remain in an "ON" or activated position, so identification of a settop box is preferably performed by one of the other methods described above.

The user is also able to communicate with the headend in a two-way communication link, so as to permit each user terminal to be interrogated or addressed from the headend to, for example, bill the user for viewing special events, poll the user as part of a survey or opinion poll, provide notifications to a user as to the presence of another user and facilitate interactive communication between users, as discussed in more detail later herein.

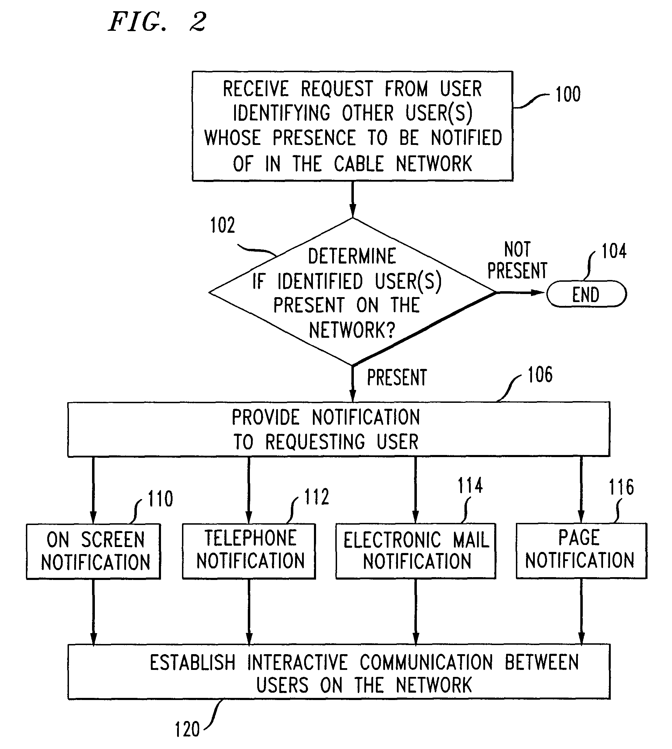

Referring now to FIG. 2, the system or more specifically, the headend in the cable network receives a request from a user, step 100. The request will be submitted from a user, who will herein now be referred to as the "requesting user." The request will identify one or more other users in the cable network for whom the requesting user desires notification of when the other identified users are present on the cable network. As used herein, the term "present" means the user is currently viewing a television program on the cable network or is using a service provided through the cable settop box such as Internet access or other similar service.

The requesting user may identify other user(s) in a variety of manners, such as providing an alias or "network name" which has been selected by the other user(s) and is recognized by the cable network. The requesting user may also provide information such as the other user(s) actual name, telephone number, address, settop box identification number or other such identifying indicia with which to identify the other user(s). In one exemplary embodiment, the requesting user may issue a "standing" request which does not expire. For example, the requesting user, may wish to be informed as to the presence of another user whenever that user is present on the cable network. The request will remain valid so long as both users are still valid members or subscribers to the cable network. In other embodiment, users may issue requests which have a limited lifetime in the system. For example, a request may be honored within the system for a predetermined amount of time such as a twenty-four(24) hour period.

The system may accept the requesting user's request via an interactive on screen facility which allows a user to enter in the identifying indicia via, e.g. a wireless keyboard which is in communication with the requesting user's settop box. Alternatively, the system may accept requests via a telephone interactive voice response unit where, e.g. the requesting user may provide another user's identifying indicia, such as a telephone number, via the telephone's keypad.

Once a request has been received by the system, the system determines if the other user(s) identified by the requesting user is present on the network, step 102. The system may accomplish this in a variety of manners, e.g. polling all active settop boxes to determine the identity of all activated settop boxes and/or what channel the settop boxes are tuned in to. Polling may be performed continuously, manually and/or periodically as determined by the system. The system may also keep a running "log" of all active settop boxes, e.g. by tracking when and if each settop box is activated and to what channel each settop box is tuned in to. Thus when a request is received, the system may merely review the "log" to determine if the identified other user(s) is present on the cable system. In another embodiment of the present invention, the system may first determine if the other user(s) identified by the requesting user are valid or "subscribing" users for that particular cable network. If the system determines that the other user(s) are not valid subscribers or members of the cable network, the requesting user will be notified and/or asked to select one or more other users to identify.

If the system determines that the other user(s) that the requesting user has identified are not present on the system, the process may simply end, step 104, e.g with the user receiving a notification that none of other user(s) identified by the requesting user are present on the cable network. Alternatively, the user may be prompted to submit another user(s) name or identification for which to check the present of on the cable network. If, in fact, the system determines that the other user(s) the requesting user has identified are present on the cable network, the system will provide a notification to the requesting user, step 106. In another embodiment, the requesting user may elect only to be notified as to the presence of other user(s) in the cable network only if those other user(s) are watching the same channel as the requesting user. For example, the requesting user may specify that he/she wishes to be notified when another user, for exemplary purposes called **USER2** is watching a music video, nature or other channel specified by the requesting user. The requesting user may also specify in generic terms as to which users, the requesting user wishes to be notified as to the presence of. For example, the requesting user may specify that he/she wishes to be notified as to the presence of any user who is watching **PROGRAM X** at a **TIME Y**. Thus the requesting user will be provided notification of any and all other users who are watching **PROGRAM X** at **TIME Y** as specified by the requesting user.

Notification to the requesting user may be provided via a number of different facilities including and on-screen notification 110, a telephone notification 1,12, an electronic mail notification 114 and a page notification 116 such as through a wireless paging device or palmtop device. For example, as discussed in more detail later herein, the user may receive a notification via a "pop-up" screen which appears on the requesting user's television screen which informs the requesting user as to the presence of the other identified user(s). If the requesting user has identified several other users and more than one of those other users is present on the cable network, the requesting user may be provided with an on-screen listing of the users who are presently on the cable network. Furthermore, the system may provide an interactive communications links between the users in the cable network, step 120, as discussed in more detail later herein.

In other embodiments, once a requesting user has submitted the identities of other cable users to request notification as to the presence of, these other cable users may also be notified of the requesting user's request. For example, if a requesting **USER1** has requested to be identified as to the presence of a **USER2** and a **USER3**, then the system will provide a notification to both **USER2** and **USER3** that **USER1** has identified them for notification. In one embodiment, **USER2** and **USER3** may either accept or "block" **USER1's** notification request so that their presence is hidden from **USER 1**.

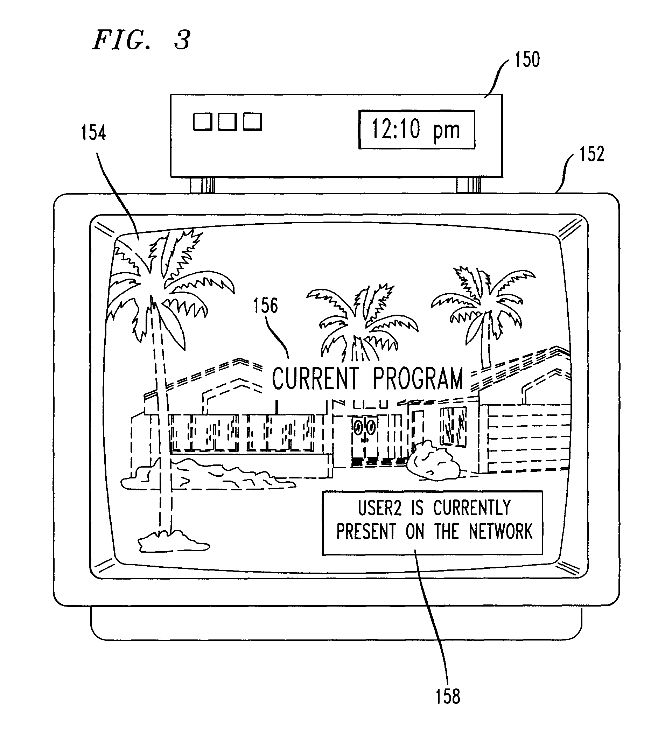

Referring now to **FIG. 3**, an exemplary user setup is shown which includes a settop box 150 which is in communication with a television 152. The television includes a screen 154 on which a program 156 such as television show or cable movie is shown. As shown, the user may receive a notification such as a window or "pop-up" screen 158 which appears on the program screen 156. The screen may be overlaid, superimposed or blended into the current programming being shown on screen 154. In this example, the requesting user has requested to be notified as to the presence of another user, called **USER2** for exemplary purposes, on the cable network. Accordingly, once the system detects the presence of **USER2** on the cable network, as described earlier herein, the requesting user will receive a notification such as shown in **FIG. 3**.

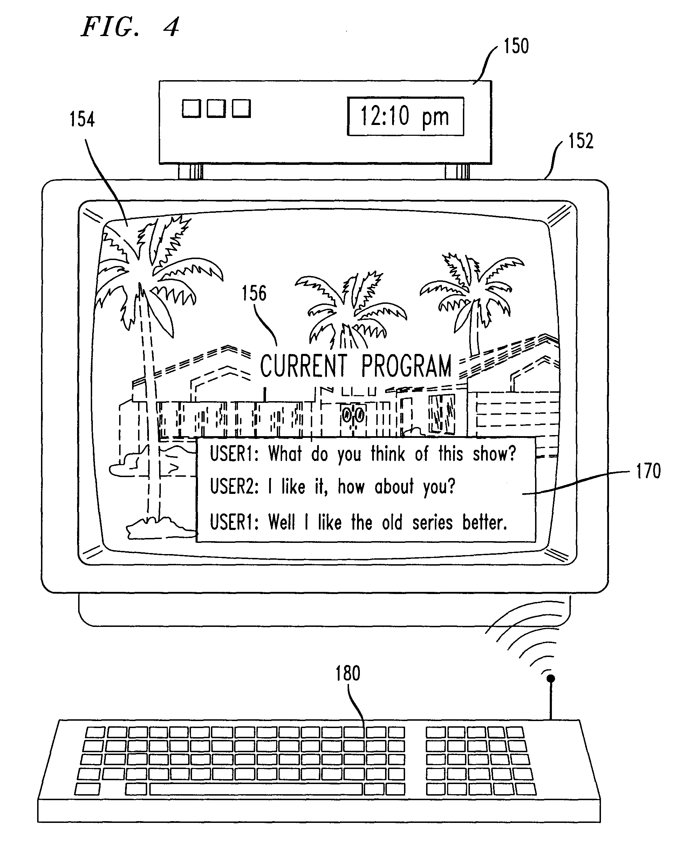

Once the requesting user has been notified of the presence of **USER2**, the requesting user may elect to establish an interactive communication or "chat" with **USER2**. As shown in **FIG. 4**, the system may provide an screen 170, by which the requesting user, in this example called **USER1**, and **USER2** may communicate. Ideally, both **USER1** and **USER2** will have access to a communicative device such as a wireless keyboard 180 which interfaces with the settop box 150. The keyboard 180 allows users to enter in messages to one another via the on-screen communication link. In one embodiment, as a user types in a message, the message is transmitted via a wireless, such as an infra-red or radio-frequency signal to the settop box. The settop box is in turn in communication with a headend in the user's local cable network. The headend will transmit the message to the other user's settop box in the cable network for display on the other user's television screen. In the case of where two or more users are not serviced by the same headend, the originating message user's servicing headend will be in communication with another headend in the cable network to deliver and receive the message.

Although only two users are shown communicating in **FIG. 4**, more than two users can be easily accommodated in the system. It is also contemplated that users of various or competing cable systems may communicate with each other so that one user in one part of the country may receive notification and communicate with another user in another part of the country. However, for purposes of the examples contained in this detailed description, it is assumed that the users are part of or subscribers to the same or related cable network.

In another embodiment, the requesting user may receive notification by an electronic mail message as to the presence of one or more other users identified by the requesting user. In such a case, the information contained in the notification electronic mail message may include information such as the other user(s) names, addresses and/or telephone numbers. Such telephone numbers may be presented to the requesting user in the form of a connection facility such as a "hotlink" which, upon being selected, will establish a telephone connection between the requesting user and the other user(s) the requesting user has identified.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention.

## Claims

1. A method of notifying one or more users to the presence of at least one other user in a cable network, the method comprising the steps of:
receiving a request from a user in the cable network, the request identifying the at least one other user in the cable network the requesting user wishes to be notified of when the at least one other user is present on the cable network;
determining whether the at least one other user in the cable network identified by the requesting user is present on the cable network; and
providing a notification to the requesting user when the at least one other user identified by the requesting user is present on the cable network.

2. The method of claim 1, further comprising the step of:
determining what channel the at least one other user identified by the requesting user is watching on the cable network, wherein notification is provided to the requesting user when the at least one other user identified by the requesting user is watching the same channel as the requesting user.

3. The method of claim 1, wherein the step of determining whether the at least one other user in the cable network identified by the requesting user is present on the cable network includes the step of:
periodically polling the users in the cable network to determine which user is present on the cable network.

4. The method of claim 1, wherein notification is provided to the requesting user when the at least one other user identified by the requesting user is watching the same channel as the requesting user.

5. The method of claim 1, further comprising the step of:
establishing an interactive communication between the requesting user and the at least one other user when both the requesting user and the at least one other user are present on the cable network.

6. The method of claim 1, wherein the at least one other user identified by the requesting user can block notification of the requesting user.

7. The method of claim 1, wherein the notification provided to the requesting user is a telephone call.

8. The method of claim 1, wherein the notification provided to the requesting user is an on-screen notification screen window.

9. The method of claim 1, wherein the notification provided to the requesting user is an electronic mail message which contains a connection facility for establishing a telephone communication between the requesting user and the at least one other user identified by the requesting user.

10. The method of claim 1, wherein notification is provided to the requesting user via an on screen list which lists the identity of the at least one other user identified by the requesting user.

11. A system for notifying one or more cable users to the presence of one or more other cable users in a cable network, the system comprising:
means for receiving a request from one or more requesting cable users in the cable network, the request identifying one or more other cable users in the cable network the one or more requesting cable users wish to be notified of when the one or more other cable users are present on the cable network;
means for identifying which of the one or more other cable users are present on the cable network; and
means for providing a notification to the one or more requesting cable users when the one or more other cable users identified by the one or more requesting cable users are present on the cable network.

12. The system of claim 11, wherein notification is provided to the one or more requesting cable users when the one or more cable users identified by the one or more requesting cable users are watching the same channel as the one or more requesting cable user.

13. The system of claim 12, wherein the means for identifying which of the one or more other cable users on the cable network includes means for determining what channel each of the one or more cable users is watching.

14. The system of claim 11, wherein the means for providing notification to the one or more requesting cable users includes means for displaying a notification screen on the television of the requesting cable user.

15. The system of claim 11, further comprising means for specifying a specific cable program during which it is determined which of the one or more other cable users are present on the cable network.

16. The system of claim 11, further comprising:
means for establishing an interactive communication between the one or more requesting cable users and the one or more other cable users identified by the one or more requesting cable users when both sets of users are present on the cable network.

17. A computer readable medium containing executable program instructions for performing a method on a computer connected to a cable network, the method comprising the steps of:
receiving a request from one or more of the cable users, the request identifying one or more other cable users for whom the requested cable user wishes to be notified as to the presence of on the cable network;
determining the identity of one or more cable users who are present on the cable network; and
notifying the one or more requesting cable users as to the presence of the one or more other cable users identified by the requesting cable user.

18. The computer readable medium of claim 16, wherein notification is provided to the one or more requesting cable users when the one or more other cable users identified by the requesting cable user are watching the same channel as the requesting cable user.

19. The computer readable medium of claim 16, wherein the step of determining the identity of one or more cable users who are present on the cable network is performed by one or more headends in the cable network.

20. The computer readable medium of claim 16, further comprising the step of: establishing an interactive communication between the one or more requesting cable user and the one or more other cable users identified by the requesting cable user.
